# EUROPEAN PATENT APPLICATION

(11) **EP 1 484 417 A1**
(43) Date of publication of application: **08.12.2004**
(21) Application number: 02782017.4
(22) Date of filing: 08.10.2002
(51) Int. Cl.: C14C 9/00

(54) **METHOD OF INCORPORATING HEAT-STABLE PARTICLES IN LEATHER**

(30) Priority: 08.03.2002 WO PCT/MX02/00018
(71) Applicant: Cueros Industrializados del Bajio, S.A. de C.V., 37150 Leon, Guanajuato (MX)
(72) Inventor: GUERRERO-SALINAS, Juan, Fortino, 37208 Leon, Guanajuato (MX); PEREZ-DIAZ, Juan, Francisco, 36000 Guanajuato, Guanajuato (MX); HERNANDEZ-MORENO, Gustavo, Rogelio, 37160 Leon, Guanajuato (MX)
(74) Representative: von Hellfeld, Axel, Dr. Dipl.-Phys.
(86) International application number: PCT/MX2002/000097
(87) International publication number: WO 2003/076670

(57) **Abstract**

This invention outlines laminates with low capacity for heat absorption with suitable optical and thermodynamic properties for thermal control, useful in the car-making industry, in furniture, and other household, as well as in articles of clothing. Materials incorporate several technologies efficiently regulating temperature, both for reflecting infrared light and for regulating temperature, regardless of the material color, and therefore, achieving a comfort greater to that obtained with laminates from the previous art. The invention allows obtaining also materials with no deterioration due to aging chemical reactions, In addition, this invention describes a process to obtain laminates with low capacity for heat absorption.

## Description

### FIELD OF INVENTION

This invention related to techniques for finishing laminates, and particularly, relates to laminates with low capacity for heat absorption and process for their elaboration.

### BACKGROUND OF THE INVENTION

There is a great assortment of products exposed to different heat sources incorporating laminates. Among the products most exposed to said heat sources are laminates making up different auto parts, and which are normally exposed to the sun throughout long periods of time, circumstance that triggers a considerable increase in the temperature of such laminates.

Due to the above, the thermal comfort of passengers in a vehicle has currently become a parameter of great importance both for automobile manufacturers and their end users.

In addition, this trend has been triggered by the impact this comfort has on the air conditioning systems, since they affect the power consumption of said systems, and their effects on the global warming.

The temperature in a driver's cab can exceed 80°C in a warm summer's day due to the affecting solar radiation, whereas in a winter's day, temperatures can reach - 30°C. Under such conditions, passengers may have the bad experience of making their body skins contact with the warm or chill of a seat, drive wheel or the inside of the vehicle, which can reach even higher temperatures. This is of great importance in the case of cars since a passenger, when inside a vehicle, makes contact with any of said elements, between a 15 to a 20% with his/her body skin surface. Although air conditioning systems may render this effect less intense, the time required to level out the temperature of such things, is unsatisfying for the passenger to feel comfortably over long periods of time, even in those seats with ventilation or thermal controls, since, furthermore, the heat transference through the body, and due to the contact with the seat is initially very cold or very warm and has an important effect in the thermal sensation of an automobile's passenger.

Aimed at achieving a more comfortable climate within the vehicle and diminish the temperature changes, different air conditioning systems have been constantly developed; the tend, however, to use more glass in vehicles has brought about restrictions in envisaging new designs for air conditioning systems from an economical point of view and a power consumption standpoint. This is related to the size, capacity, and technology of such systems required to accomplish desired comfort.

Due to the economical and power energy restrictions in the new air conditioning equipments for vehicles, in recent years the industry has focused its efforts towards the development of materials with special optic and thermo-dynamic properties for use inside and outside vehicles such as seat coverings, dashboards, driving wheels, accessories, etc., so that surface temperatures behave more stable when subjected to both, cold and warm temperatures; and that, this way, they become more comfortable by touch, and also, decrease the cooling needs inside the vehicle, together with the power consumption of air conditioning systems.

Besides that the thermodynamic properties of materials must be used for their application, another important function are the optical properties that, as a whole, result in a great impact on the thermal, psychological, and physiological comfort for the human being.

Now then, the amount of energy released due to the metabolism, proves to be according to the muscular activity, in accord with Fanger (1972), the metabolic activity inherent to the physiological activity changes from 1 to 1.8 met (1 met = 58.15 W/m²) depending on the traffic level.

More specifically, there is a great amount of auto parts, mainly inside vehicles, that incorporate laminates, whether natural or synthetic, such as leather and its byproducts such as the split, polymer synthetic materials, or else, fabrics of different nature. As mentioned above, interiors must comply with use resistance specifications, providing comfort and security to the use, collaborate with design, appearance, besides being a component in the thermal control by reducing the power consumption and the capacity required in the parts making up the air conditioning system.

These comfort and thermal control requirements, however, have not been achieved since laminates currently used have a high heat absorption capacity, and therefore, to increases their temperature, for which reason they are particularly uncomfortable in warm and very cold climates.

As a result, there is the need to have laminates incorporating a dynamic temperature control similar to that regulating the temperature in the human body, dampening for a temperature range and time, besides its optical properties that avoid the light from the sun to a great extent, with an important influence in the psychological and physiological comfort, and thus reducing the problems in the skin of the human body due to an excessive perspiration.

In the case of leather, there are some patents such as the US 6,179,879 B1, which outlines the use of beads with phase changing materials (PCM's, for its initials in English), by means of which it is intended to achieve the appropriate thermal control of leather, Leather, however, elaborated through such process features a still very heating not yet achieving the comfort required for the case of heating the inside elements in automobiles.

Now then, as mentioned in US patent 6,194,484 B1, it has been thought as desirable to get pigments or particles with the capacity to reflect visible light within the range of 0.35 to 0.7 micrometers, up to an 80%, while the absorption within the range close to infrared from 0.7 to 2.5 micrometers increases by 10% in 0.7 micrometers and 50% in 2.5 micrometers. The emission within the range of 8 to 14 micrometers typically decreases by 90%. Notwithstanding the above, solar radiation has its maximum energy in around 1 micrometer, for which reason in this scale energy absorption would not be desirable for the surface of a thermal comfort substratum. As a result, there is also the need to find a balance in the properties of materials allowing for absorbing the energy needed to diminish changes in temperature. Furthermore, the application of this type or covering is limited to the construction industry, and thus, it is not possible to use them in flexible substratum with ease.

Documents referred to above, have failed to comply with the expectation for such components producing heat in laminates to have a chemical stability to the Xenon radiation and to heat, they are opaque to UV light, and to have at the same time, a great reflectivity to the infrared spectrum, and a high resistance to aging; regardless their performance in the material to which they incorporate must be such not to migrate, dissolve, or that may be suitably micronized, and have a high refraction ratio.

According to the above, to this date no laminate, whether natural or synthetic with a natural or colored finishing, has been elaborated, and which allows to satisfy the required features, and that at the same time, allow for the elements outlined in the state of the art as thermal. control aids, such as microcapsules of phase changing materials (paraffins, hydrous salts, and others) to perform, in the best way, their regulating function. Similarly, it has not been possible to suitably provide the thermal comfort characteristics in substratum with no surface finishing, including raw hides.

Due to the above, efforts have been made to cut out disadvantages of laminates in the state of the art through development of laminates with low heat absorption capacity with suitable optical and thermodynamic properties for thermal control to be used in the automobile industry, in home finishing, and articles of clothing, as well as with a process to change the thermodynamic and optical properties in the relevant laminate's surface.

### OBJECTIVES OF THE INVENTION

Realizing the imperfections in the above art, it is an aim of this invention to provide laminates with low heat absorption capacity with suitable optical and thermodynamic properties for thermal control and that may as a result, be used in the car-making industry, furniture, other households, and in articles of clothing, as well.

It is also an aim of this invention to provide laminates with low capacity for heat absorption that efficiently incorporate other temperature, regulating technologies, such as the presence of beads with phase changing materials, the operation of which is not effected, but improved due to the low absorption of infrared radiation.

It is another aim of this invention, to get laminates with low heat absorption capacity allowing for a suitable thermal control both at high temperatures and at low ones, regardless of the color.

It is yet another purpose of this invention, to provide low heat absorption capacity laminates with fibril-scale hydrophilic properties allowing for their handling at temperatures of 120°C to 150°C, under process of lamination with a 6% of maximum contraction that keeps their relevant smoothness.

An additional objective of this invention is to providing laminates with low heat absorption capacity with no deterioration due to aging chemical reactions.

It is yet another objective of this invention to provide a process allowing to obtain laminates with low heat absorption capacity according to the objectives mentioned above.

### SUMMARY OF THE FIGURES

The innovative features considered as distinctive of this invention shall be set out to detail within the attached claims. However, their structure and operation, together with other objects and advantages thereof, will be better understood in the next detailed description of a specific embodiment, when dealt with the attached drawings, where:
Figure 1 is a graph of reflective and non-reflective black aniline spectra.
Figures 2A, 2B and 2C are graphs of reflective pigment spectra in comparison with the spectrum of black, yellow, and red non-reflective pigments, respectively.
Figure 3 is a cross-sectional view of the raw hides where a fiber matrix and the inappropriate penetration of beads are depicted.
Figure 4 is a cross-sectional view of the raw hides where a fiber matrix and a suitable penetration of beads are depicted.
Figure 5 is a cross-sectional view of the leather in figure 4 with a finishing film where a reflective pigment is depicted.
Figure 6 is a graph where heating profiles are compared at radiation conditions of a 250 watt lamp, at a perpendicular distance of 25 cm of different finished leather from the examples in this description.
Figure 7 is a graph where comfort profiles of different leathers in the examples of this invention are compared.
Figure 8 is a graph where heating profiles of radiation conditions of a 250 watts lamp are compared at a perpendicular distance of 25 cm of several finished leathers of the examples in this invention.

### DETAILED DESCRIPTION OF THE INVENTION

It has been discovered that through the use of coloring agents with a high reflective capacity to infrared radiation during the damp and dry finishing of laminates, it is possible to obtain laminates with different colors and thermal regulation properties suitable for their application in the car-making industry, in furniture, and other households, or in garments, including applications where the user of the object is in direct touch with a surface subjected to solar radiation.

According to the above, the laminates with low heat absorption capacity of this invention consist of at least one fiber matrix; at least from 0.5 to 3.5 of weight, on the basis of the matrix weight of fibers, of an agent with high reflective capacity to infrared radiation incorporated within such fiber matrix; and/or, at least a coating, preferably an external one, with at least 3% of an agent with a high capacity to infrared radiation applied on at least one of the surfaces of the laminate.

In a preferred embodiment of this invention, laminates are selected among laminates made up by natural or synthetic fibers, more preferably selected between fabrics from natural or synthetic fibers, leather, leather byproducts, polymer laminates and mixtures or combinations thereof.

In a preferred embodiment of this invention, the agent with a high reflective capacity to infrared radiation, is selected among colorants and pigments with high reflection to infrared radiation, preferably with a reflectance higher that 40% of the wavelength interval from 750 to 2500 nm, more preferably selected among organic or inorganic colorants and pigments. In a preferred embodiment, organic colorants and pigments are selected between organic compounds of the type that includes halogenated aromatic groups, while inorganic colorants and pigments are selected between metallic oxides in crystalline form or combinations thereof.

In specific embodiment of this inventions, aniline derivatives of azo groups with no traces of compounds with high absorption to infrared radiation such as organometallic groups or naphthalene derivatives, more preferably with no traces of squarillium, pentamethyne cyanine naphthoquinone and napththalocyanine, with the general formula 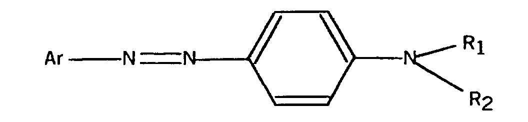 where Ar is a mono-, di- and tri-halogenated phenyl; and R1 and R2 are selected between hydrogen and chains with 1 to 20 carbon atoms.

Likewise, in a specific embodiment the metallic oxides of inorganic pigments are preferably selected between Titanium oxides (IV), Nickel, Babbit metal (V), Chromium (III), Copper (II), Iron (II), Manganese (II), Manganese (III), and Manganese (IV), or combinations thereof, the crystalline structure of such pigments is preferably selected between the rutile or spinel type.

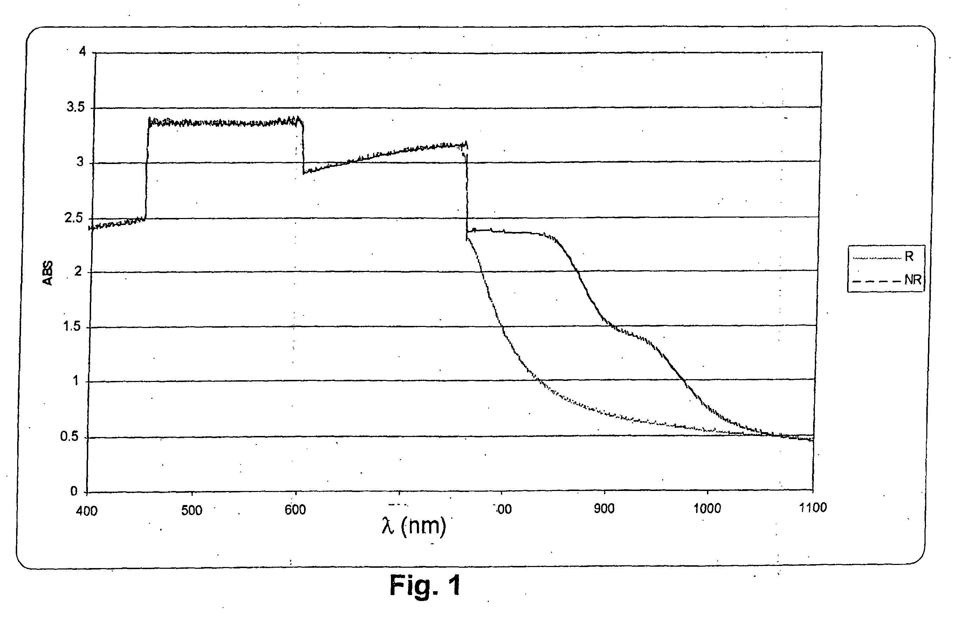

As can be seen in figure 1, aniline derivatives useful for this invention, feature absorption spectra in the infrared region, which greatly differ from those of the previous art, since the black reflective aniline (R) presents an absorbance very much less than that of a non-reflective aniline of same color (NR), used in the state of the art for laminates.As may be seen from such figure 1, the aniline used in this invention for black color features and absorbance significantly minor to that of the aniline of the previous art at the wavelength interval included almost between 750 and 1000 nm, which mainly corresponds to the part o the spectrum relating to the infrared with a higher energetic capacity. If at all possible, preferred anilines of this invention are incorporated to the fiber matrix of this invention laminate.

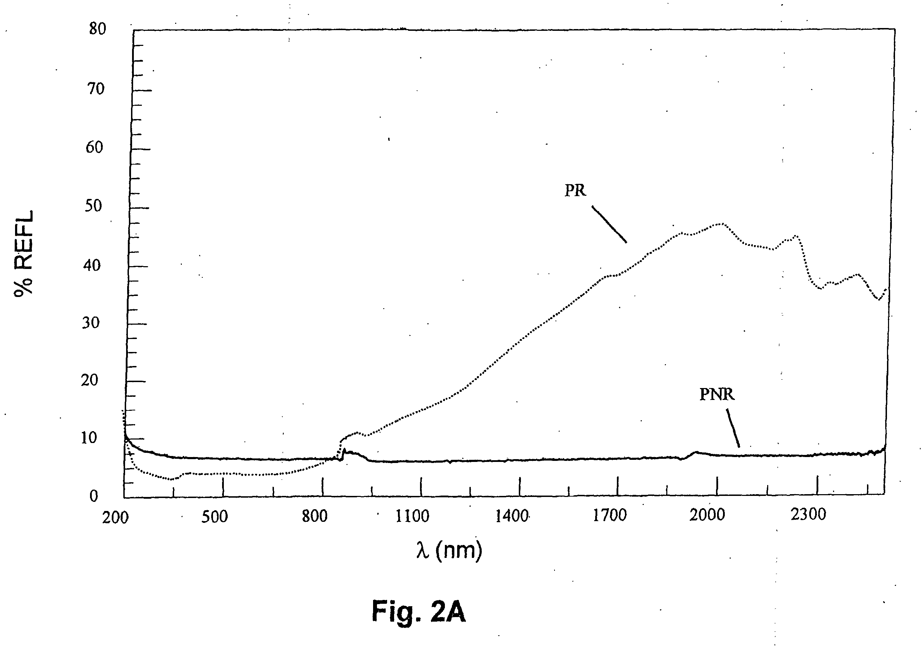

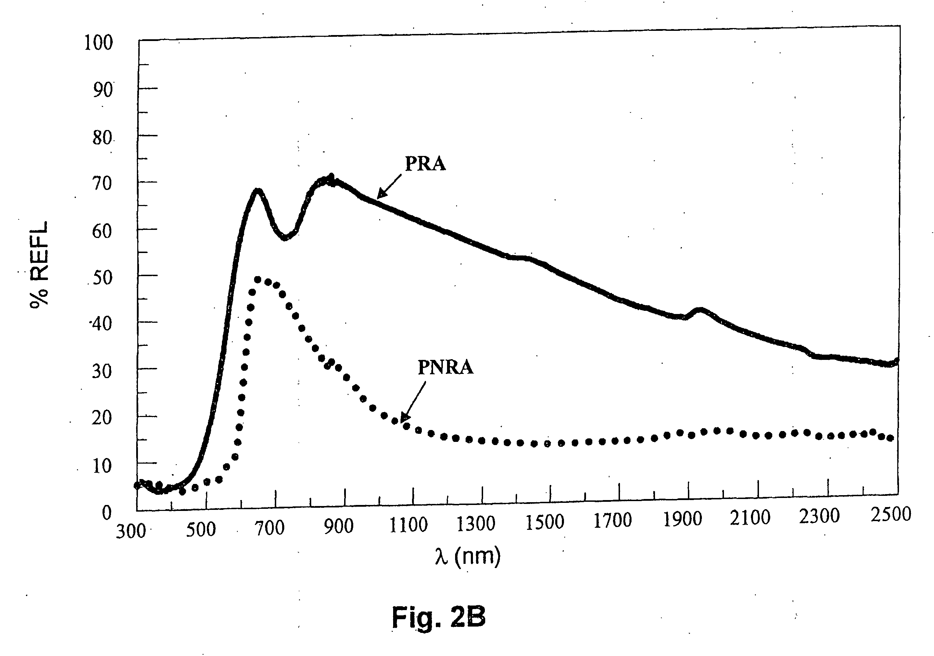

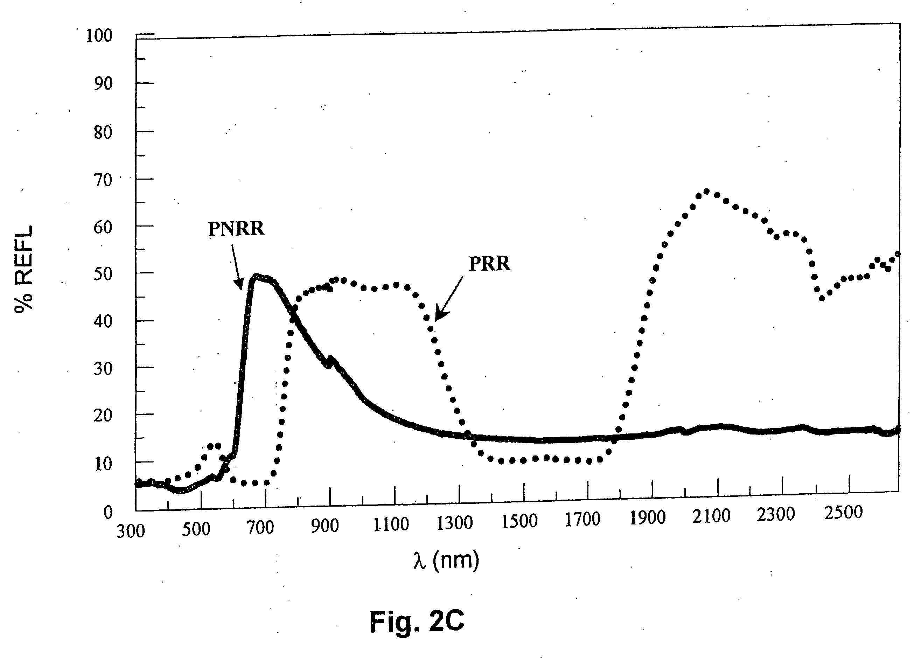

Likewise, in the embodiment where reflective pigments are used, they preferably present a reflectance greater than 40% of the wavelength interval included almost between 6750 and 2500 nm. If at all possible, reflective pigments are incorporated as part of an external coating on at least one of the laminates of this invention. Figure 2A depicts the reflectance spectrum of one reflective black pigment (PR) compared with the reflectance spectrum of a reflective black pigment of those commonly used in the previous art based on the smoke black (PNR). Figures 2B and C depict the same comparison of a reflective inorganic pigment, with respect an organic pigment of the previous art for yellow reflective (PRA) and non-reflective (PNRA) pigments, and reflective (PRR) and non-reflective (PNRR) reds, respectively. As can be seen, the wavelength interval included almost between 750 and 2500nm, reflective pigments feature, in general, a reflectance much greater than non-reflective pigments, being in average of almost 40% for wavelengths of the nearby infrared, as depicted in table I for black pigments in Figure 2A.

**TABLE I.**

| Solar reflectance evaluated according to the AST, E903-96 standard for black pigments. | | | | |
|---|---|---|---|---|
| **REFLECTANCE %** | | | | |
| **Pigment** | **Total Solar** | **Ultraviolet** **(305-400 nm)** | **Conspicuous** **(410-718 nm)** | **Close Infrared** **(724-2494)** |
| PNR | 6.1% | 6.6% | 6.2% | 6.0% |
| PR | 21.7% | 3.7% | 4.1% | 40.4% |

Materials with low capacity for heat absorption of this invention, reach a maximum temperature of 80°C after being subjected to a radiation of a 250 watts infrared lamp perpendicular to the surface of the laminate, at 20 cm and after 1 hour; while at same conditions, laminates of the state of the art reach up to 130°C, and thus, their molecular structure, appearance, and mechanic properties are affected.

In another additional embodiment to this invention, besides the agent with high capacity to reflect infrared radiation, a temperature regulating agent is incorporated to the laminate, preferably of the type including a phase changing material, in such amount that such temperature regulating agent constitutes from 3% to 16% of the weight with respect to the laminate, when such temperature regulating agent is incorporated to this invention laminates within the fiber matrix of the laminate, In another additional embodiment, the temperature regulating agent is incorporated as part of the external coating containing the agent with high reflection capacity to infrared radiation applied on at least one of its surfaces, and such temperature regulating agent constitutes at least 8% in weight of such coating, preferably at least 12% Through the addition of such temperature regulating agent, materials with low capacity for heat absorption of this invention, reach a maximum temperature of 66°C after being subjected to the radiation of a 250 watts infrared lamp perpendicular to the laminate surface at 20cm, after 1 hour. If at all possible, the phase changing material is encapsulated at any scale whether in the order of micrometers or nanometers, and with a melting point comprised between -10°C and 70°C, preferably selected between linear paraffins with 10 to 30 carbon atoms. In a specific embodiments, the phase changing material is selected, if at all possible, from group comprised by the n-tridecane, n-hexadecane, n-heptadecane, n-octadecane, n-nonadecane, n-eicosane, n-heneicosane, n-docosane, n-tricosane, n-tetracoisane, n-pentacosane, n-hezacosane, n-heptacosane, and n-oactacosane.

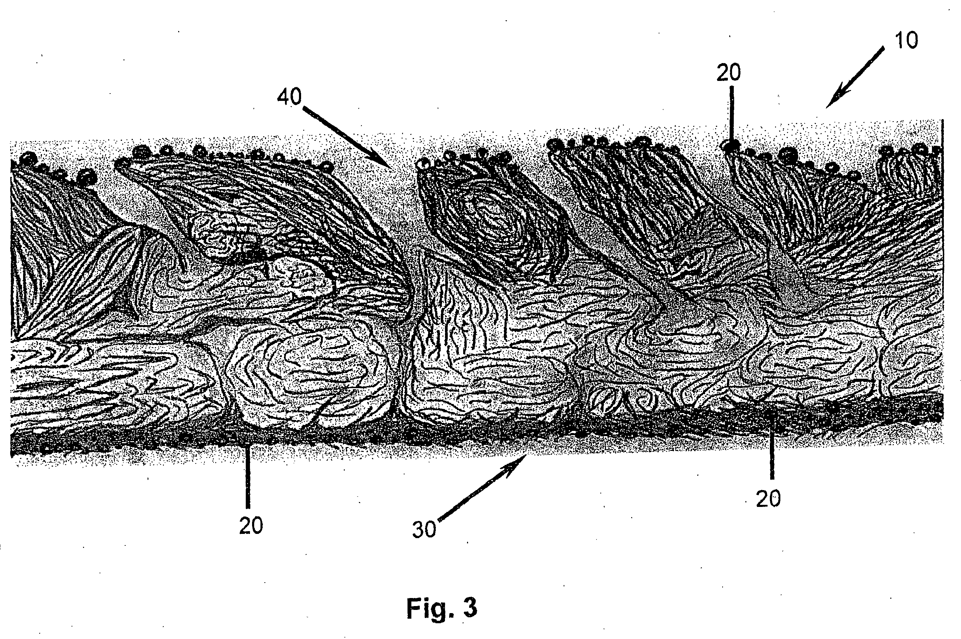

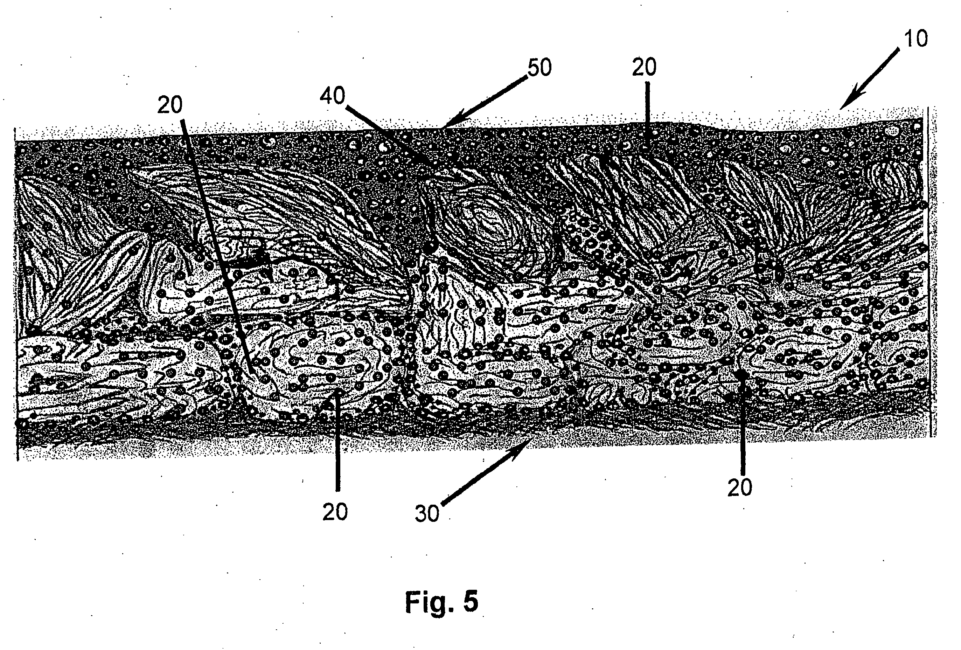

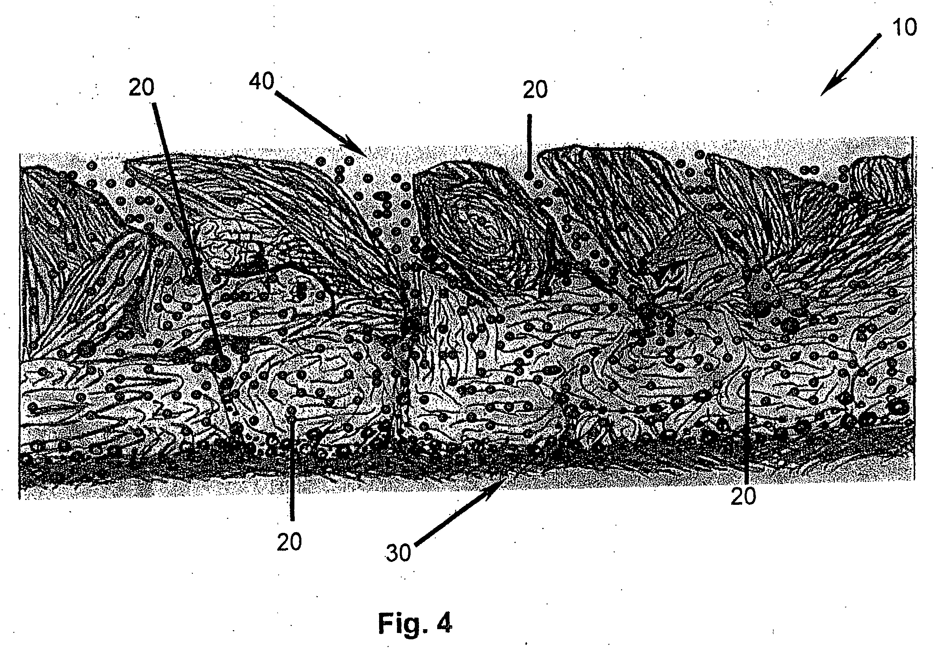

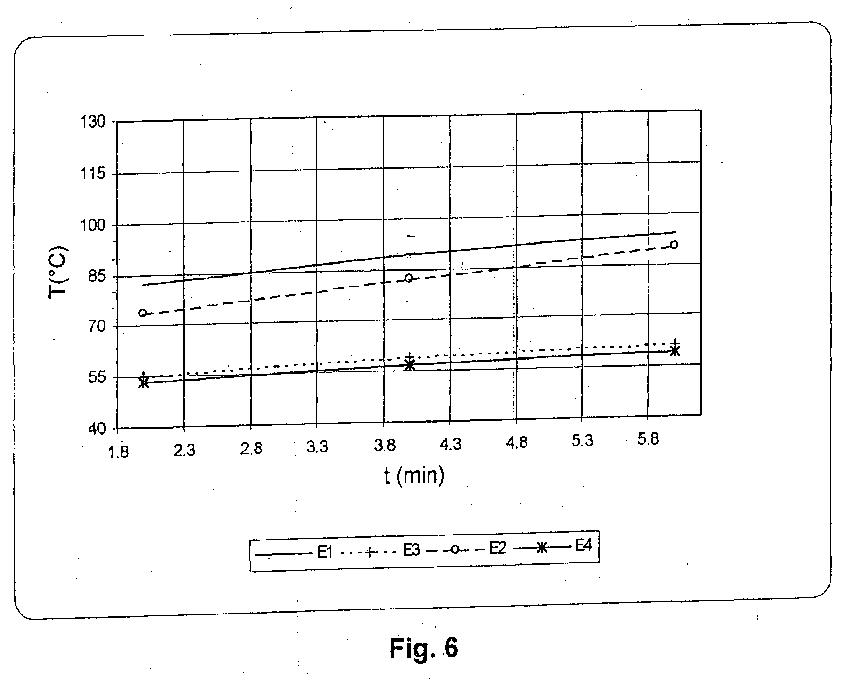

It is worth pointing out that, the embodiment in which the laminate is leather or derivatives thereof, the state of the art failed to incorporate phase changing materials in a sufficiently uniform manner in order to achieve a suitable thermal regulating effect due to the uneven nature of leather, with an incorporation just as that depicted in figure 3, where a cross-sectional of leather 10 can be seen, where beads 20 remain on the flesh side surface 30, or grain split side 40 of the leather 10, instead of suitable penetrating as shown in figures 4 and 5, besides the incorporation of such spheres to the finishing 50, as depicted in figure 5.

As to the process to get the laminates of this invention, the process consists of putting a laminate formed by a fiber matrix in touch with an agent with high reflective capacity to infrared radiation and/or apply the coating as minimum, preferably in the outsides, and which includes at least an agent with high capacity to reflect infrared radiation on at least one of the laminate's surfaces, so that, finally, dry the laminate in such a way that the agent with high capacity to reflect infrared radiation remains fixed to the fiber matrix of the laminate and/or at least to one of its surfaces.

In a specific embodiment in which the laminate is leather or derivatives thereof, the process is carried out from any type of leather or derivatives thereof; that is to say, from any leather-derived material or animal skin, and which has already underwent at least one tanning process. The leather is then put in touch, with a lubricating agent, preferably as the same time as the agent with high capacity to reflect infrared radiation. However, in an additional embodiment, the lubricating agent may be put in touch with the leather or its derivatives in an additional stage, whether before or after the incorporation of the agent with high reflective capacity to infrared radiation.

In a preferred embodiment of the process in this invention, a temperature regulating agent is additionally included in the laminate, preferably encapsulated, in the form of a suspension is preferably obtained through mixing the temperature regulating agent, the agent with high capacity to reflect infrared radiation with a surfactant composition comprised by 10 to 35% of the first tens-active composition selected between fatty alcohols; from 30% to 80% of a second surfactant composition selected between fatty acid derivatives; from 30% to 80% of a third surfactant composition selected between sorbitan esters; and, from 1 to 10% of a fourth surfactant composition selected between fatty amines and ethoxylated derivatives from the first, second, and third surfactant compositions.

Such suspension of the temperature regulating agent is incorporated within the fiber matrix of the laminate or as part of a coating on the laminate surface, whether together with the agent with high capacity to reflect infrared radiation or separately.

More preferably, the third surfactant composition is selected between isodecyl alcohol, lauryl alcohol, tridecyl alcohol, cetyl alcohol, cetyl stearyl alcohol, stearyl alcohol, oleic alcohol, and mixtures or combinations thereof.

Likewise, the second surfactant composition is preferably selected between lauryl acid, palmic acid, polyethylene glycol monostearate, stearic acid, and oleic acid.

Referring now to figure 4, it depicts a cross-sectional view of the raw hides which has suitably incorporated the beads with its inner phase changing materials, according to this invention. Likewise, figure 5 depicts a cross-sectional view of the leather in figure 4 with an external coating including a reflective pigment, and where the beads are incorporated with temperature regulating materials, according to this invention.

It is worth indicating, in addition, that the conditions at which it is performed the incorporation of agents with high capacity to reflect infrared radiation according to this invention, may differ depending on the nature of the laminate. It is possible to make use of any of the arts outlined in the state of the art for the incorporation or soaking up of laminate substance, as well as the arts outlines for application of films to them, as may be, as an enumeration but not as a limitation, the direct contact with agents in cylinders or other contact devices, or else, the application of agents through barrels, rolling, sprinkling, etc. Besides, it is worth mentioning that, this invention allows getting laminates with multiple colors.

Laminates of this invention and the process to get them, will be more clearly depicted through the following examples, which are shown for pictorial purposes, for which reason they don't limit the same.

### EXAMPLES

Aimed at clearing the possibility to take the invention into practice from laminates with complex fiber matrixes, this invention process was carries out from wet tanned leather through Chromium, with the aim of getting black leather, and which had featured a greater heating than other colors in the state of the art.

Leathers underwent the process known as retannage-dyeing-greasing, and which require the use of different agents at the known conditions in the state of the art for this type of process, Thereafter, the leathers underwent a finishing process through a straining and dry stage, followed by a slackening stage and a polishing stage in order to get what is known in the state of the art as "raw hides". This raw hides was then subjected to a stage for the application of films by spraying black paint on the surface known as "grain split", that is to say, the surface with the hair of the animal before the tanning process. Once the paint is dry, the leather underwent an embossing stage to provide the film obtained after the film application stage, with a texture; after this, the leather was subjected to two additional stages for application of films through spraying, and a final 50-200 µm film was accomplished. According to this process, different leathers were manufactured by using the agents outlined for this invention, in combination with the agents normally used in the state of the art, in line with what is depicted in Table II.

**TABLE II**

| CHARACTERISTIC | E1 | | E2 | E3 | E4 |
|---|---|---|---|---|---|
| Leather load weight [=] Kg | 32 | | 32 | 32 | 32 |
| weight % of Greasing Oil (AE) | 10 | | 10 | 10 | 10 |
| Type of Dyeing Agent | TAP | | TAP | TAP | TAP |
| weight % of Dyeing Agent | 2 | | 2 | 2 | 2.5 |
| weight % of beads with a temperature regulating agent in fiber matrix | 0 | | 10 | 12 | 14 |
| weight % of beads with temperature regulating agent in the finishing coating | 0 | | 0 | 9 | 10 |
| Type of pigment in the finishing coating | PAP | | PAP | PRI | PRI |
| weight % of pigment in the finish coating | 22 | | 22 | 15 | 20 |
| Dry weight of the coating applied [=] g/dm² | 0.645 | | 0.645 | 0.645 | 0.645 |
| AE: Sulfite greasing agent | | TAP: Non-reflective aniline used in the previous art with impurities of organometallic compounds or naphthalene derivatives. | | | |
| PRI: Reflective inorganic pigment with chromium oxide (III), iron oxide (II), iron oxide (III), and nickel oxide (II) with crystalline matrix of spinel preferred for this invention. | | TR: Reflective black aniline preferred for this invention, with no organometallic compounds nor naphthalene derivatives. | | | |
| PAP: Organic pigment used in the previous art based in smoke black. | | | | | |

As regards the thermal behavior of leather obtained for examples 1 to (E1 to E4), figure 6 depicts a graph of the leather heating profile from the different examples when subject to a 250 watts lamp at a perpendicular distance of 25 cm, where we can see that the better behavior in reference to time, is accomplished through incorporating several rules outlined in this invention, being evident the synergic effect secured by combining greasing oil, beads and agents with high reflection to infrared radiation.

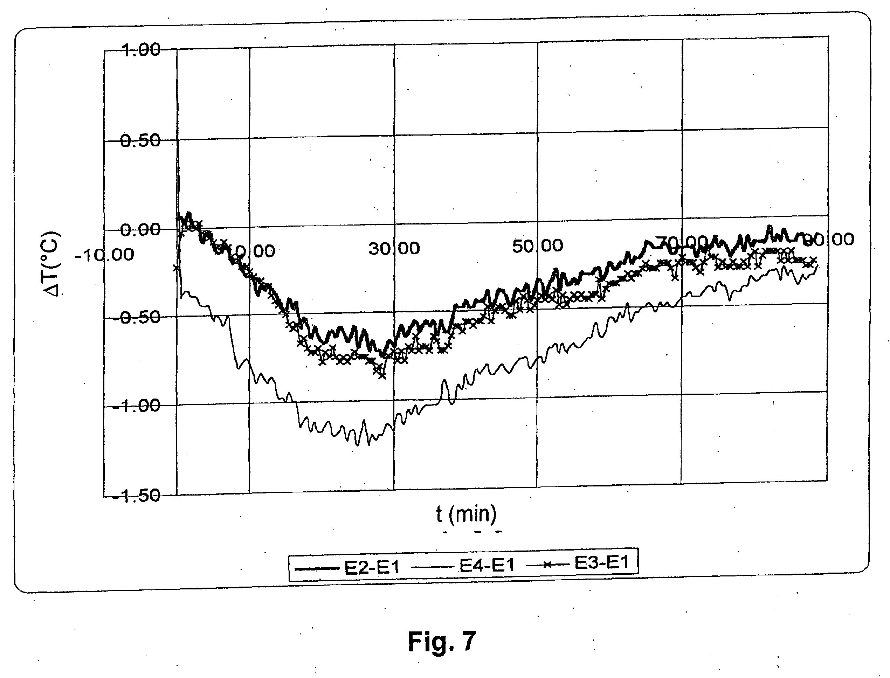

Likewise, leather in examples E1, E2, and E3 of table I, were tested with respect to their performance upon heating by the human body, evaluating their behavior when places in a chamber at 35°C with a relative humidity of 40%, and in tough with a person weighting 75 kg, and 1.75 tall, clad with a composition 50% cotton and 50% polyester and seated on them. To that respect, figure 7 depicts the difference between the temperature attained by the leg of the person when in touch with the leather in example 1 (E°), with respect to the temperature reached in leathers of examples 2 to 4 (E2 to E4), such differences are indicated in the graph as E2-E1, and E4-E1, respectively. As can be observed, by using this invention, for examples 2 and 4 (E2 to E4), in all the cases it is accomplished that the leg of the person remains at a temperature below what is achieved using leather of the previous art, as in example 1 (E1), being significant the variation up to 50 minutes where the user will a heating sensation in the substratum due to its own body heat which is less than normal.

In addition, leather in examples 1 and 4 (E1 and E4), were subjected to the aging test SAEJ 1885 (1992), applicable to leather of the car-making industry, to determine if they lose heat with the aging, where the embossing permanence is also evaluated. Results are depicted in table III.

**TABLE III**

| **Sample** | **Power Supplied** **(KJ/m**^{**2**}**)** | **Measure of color AATCC** | **Specification** | **Embossing** |
|---|---|---|---|---|
| E1 | 226.15 | 3 (color changes) | ≥4 | Fails to stay |
| E4 | 226.15 | 3 (color fails to change) | ≥4 | Stays |

Now then, aimed at illustrating another embodiment in this invention, examples 5 to 8 were carried out with the characteristics shown in Table III. The process was performed in same manner as in examples 1 to 4, but carrying out the finishing through the art known as rolling through transference, also known as "transfer".

**TABLE IV**

| CHARACTERISTIC | E5 | | E6 | E7 | E8 |
|---|---|---|---|---|---|
| Leather load weight [=] Kg | 32 | | 32 | 32 | 32 |
| weight % of Greasing Oil (AE) | 10 | | 10 | 10 | 10 |
| Type of Dyeing Agent. | TAP | | TAP | TAP | TAP |
| weight % of Dyeing Agent | 2 | | 2 | 2 | 2.5 |
| weight % of beads with a temperature regulating agent in fiber matrix | 0 | | 10 | 12 | 14 |
| weight % of beads with temperature regulating agent in the finishing coating | 0 | | 0 | 9 | 10 |
| Type of pigment in the finishing coating | PAP | | PAP | PRI | PRI |
| weight % of pigment in the finishing coating | 22 | | 22 | 15 | 20 |
| weight of the coating applied [=] g/ sec/ft² | 0.645 | | 0.645 | 0.645 | 0.645 |
| AE: Sulfite greasing agent | | TAP: Non-reflective aniline used in the previous art with impurities of organometallic compounds or naphthalene derivatives. | | | |
| PRI: Reflective inorganic pigment with chromium oxide (III), iron oxide (II), iron oxide (III), and nickel oxide (II) with crystalline matrix of spinel preferred for this invention. | | TR: Reflective black aniline preferred for this invention, with no organometallic compounds nor naphthalene derivatives. | | | |
| PAP: Organic pigment used in the previous art based in smoke black. | | | | | |

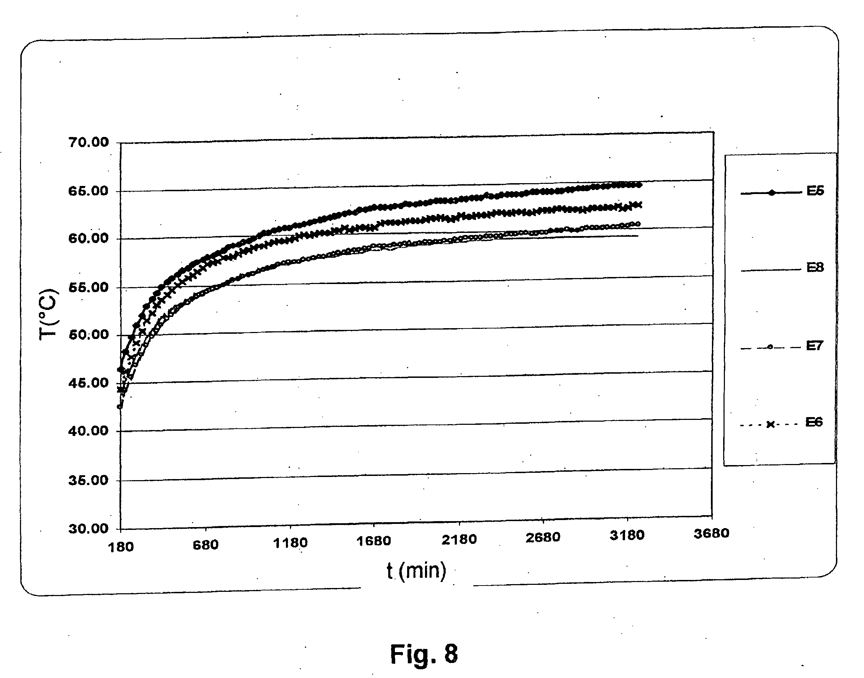

The thermal behavior of laminated leather obtained from examples 5 to 8 (E5 to E8), is depicted in figure 8, where we can see again that the preferred embodiment in this invention of example 8, depicts a maximum heating after 3000 second, less than 60°C, observing again the synergic effect of the components in the preferred laminates of this invention.

According what has been outlined above, it may be observed that laminates with low capacity for heat absorption have been conceived to achieve in them a suitable a thermal comfort, and it will be evident for any expert in the matter that embodiments of above described laminates and illustrated in the attached drawings, are only as an illustration but not as a limitation of this invention, since many changes in the consideration of their details are possible without drawing aside the scope of this invention.

Although a specific embodiment of the invention has been illustrated and outlined, it is worth emphasizing the many changes to it are possible, such as the nature of the agents with high capacity to reflect infrared radiation, the use of different greasing agents, or the use of temperature regulating agents other than the ones already outlined. As a result, this invention must not be thought as restricted, save for what is demanded by the previous art, and by the spirit of the claims attached.

## Claims

1. A laminate with low capacity for heat absorption of the type comprising a fiber matrix, **characterized in that** it includes at least a weight of 0.5 to 3.5% on the basis of the fiber matrix weight, an agent with high capacity to reflect infrared radiation incorporated within such fiber matrix; and/or, at least a coating with at least 3% of an agent with high capacity to reflect infrared radiation applied on at least on of the laminate surfaces.

2. A laminate according to claim 1, further **characterized in that** the coating with the agent with high capacity to reflect infrared radiation is external.

3. A laminate according to claim 1, further **characterized in that** such laminate is selected among laminated formed by natural or synthetic fibers.

4. A laminate according to claim 1, further **characterized in that** such laminate is selected in fabrics with natural o synthetic fibers, leather, leather byproducts, polymeric laminates, and mixtures or combinations thereof.

5. A laminate according to claim 1, further **characterized in that** the agent with high capacity to reflect infrared radiation is selected organic or inorganic colorants or pigments with high reflection of infrared radiation with a reflectance greater than 40% at the wavelength interval from 750 to 250 nm.

6. A laminate according to claim 5, further **characterized in that** organic colorants or pigments are selected among organic compounds of the type including halogenated aromatic groups.

7. A laminate according to claim 5, further **characterized in that** organic colorants are aniline derivatives featuring azo groups, with no traces of compounds with high absorption of infrared radiation such as organometallic compound or naphthalene derivatives.

8. A laminate according to claim 6, further **characterized in that** aniline derivatives have no traces of squarillium, pentamethyne cyanine naphthoquinone and napththalocyanine.

9. A laminate according to claim 7, further **characterized in that** such aniline derivatives have the general formula: 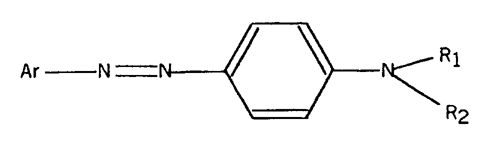 where Ar is a mono-, di-and tri-halogenated phenyl; and R1 and R2 are selected between hydrogen and chains with 1 to 20 carbon atoms.

10. A laminate according to claim 7, further **characterized in that** aniline derivatives are incorporated within the fiber matrix.

11. A laminate according to claim 5, further **characterized in that** inorganic colorants and pigments are selected among metallic oxides in crystalline form or combinations thereof.

12. A laminate according to claim 11, further **characterized in that** metallic oxides are selected among Titanium oxides (IV), Nickel (II), Babbit metal (V), Chromium (III), Copper (II), Iron (II), Iron (III), Manganese (II), Manganese (III), and Manganese (IV) or combinations thereof.

13. A laminate according to claim 11, further **characterized in that** the crystalline structure of such metallic oxides is selected between the rutile or spinel type.

14. A laminate according to claim 11, further **characterized in that** inorganic colorants and pigments are incorporated as part of the external coating on at least one of the laminate surfaces.

15. A laminate according to claim 11, **characterized in that** it reaches as maximum temperature, 80^{a} C after being subjected to radiation of a 250 watts infrared lamp, placed perpendicularly to the laminate surface at 20 cm after an hour.

16. A laminate according to claim 1, **characterized in that** a temperature regulating agent is incorporated to the laminate.

17. A laminate according to claim 16, **characterized in that** the temperature regulating agent includes a phase changing material.

18. A laminate according to claim 16, **characterized in that** the temperature regulating agent is from 3% to 16% of weight with respect to the laminate when such temperature regulating agent is incorporated within the laminate fiber matrix.

19. A laminate according to claim 16, further **characterized in that** the temperature regulating agent is incorporated as part of the external coating on, at least, one of the surface thereof; such temperature regulating agent is at least 8% of the weight of such coating.

20. A laminate according to claim 19, **characterized in that** such temperature regulating agent is, at least, 12% percent of the coating weight.

21. A laminate according to claim 16, **characterized in that** the laminate reaches as maximum temperature, 66° C after being subjected to a 250 watts infrared radiation lamp placed perpendicularly to the laminate surface at 20 cm after 1 hour.

22. A laminate according to claim 17, **characterized in that** the phase changing material is encapsulated.

23. A laminate according to claim 17, **characterized in that** the phase changing material has a melting point comprised between -10° C and 70°C.

24. A laminate according to claim 17, **characterized in that** the phase changing material is selected among linear paraffins with 10 to 30 carbon atoms.

25. A laminate according to claim 17, **characterized in that** paraffins are preferably selected from the group comprising n-tridecane, n-hexadecane, -heptadecane, n-octadecane, n-nonadecane, n-eicosane, n-heneicosane, n-docosane, n-tricosane, n-tetracosane, n-pentacosane, n-hexacosane, n-heptacosane, and n-octacosane.

26. A process to prepare a laminate with low capacity for heat absorption **characterized in that** it comprises the stages a laminate formed by a fiber matrix in contact with an agent with high capacity to reflect infrared radiation and / or apply at least the coating that includes at least an agent with high capacity to reflect infrared radiation on at least, one of the laminate surfaces, so to finally dry the laminate so as the agent with high capacity to reflect infrared radiation remains fixed to the laminate fiber matrix and / or at least to one of the surfaces thereof.

27. A process to prepare a laminate, according to claim 26, **characterized in that** such laminate is selected among laminate formed by natural or synthetic fibers.

28. A process to prepare a laminate, according to claim 27, **characterized in that** the laminate is selected among natural or synthetic fiber fabrics, feather, leather byproducts, polymeric laminates, and mixtures or combinations thereof.

29. A process to prepare a laminate, according to claim 28, **characterized in that** the process is carried out form any leather or animal skin byproduct, already subjected to at least a tanning process.

30. A process to prepare a laminate, according to claim 29, further **characterized in that** the leather or its byproduct is put in touch with a greasing agent

31. A process to prepare a laminate, according to claim 30, further **characterized in that** the greasing agent is put in touch with the leather or its byproduct at the same time as the agent with high capacity to reflect infrared radiation.

32. A process to prepare a laminate, according to claim 31, further **characterized in that** it is incorporated to the substratum of an encapsulated temperature regulating agent in the form of a suspension.

33. A process to prepare a laminate, according to claim 32, **characterized in that** the temperature regulating agent is incorporated within the laminate fiber matrix or as part of a coating on the laminate surface, whether jointly or apart from with the agent with high capacity to reflect infrared radiation.

34. A process to prepare a laminate, according to claim 32, further **characterized in that** such suspension is obtained through mixing the temperature regulating agent with a surfactant composition encompassing from 10 to 35% of a first surfactant composition selected among fatty alcohols; from 30% to 80% of a second surfactant composition selected among derivatives of fatty acids; from 30% to 80% of a third surfactant composition selected between sorbitan esters; and, from 1 to 10% of one fourth of a surfactant composition selected between fatty amines, and ethoxylated derivatives of the first, second and third surfactant composition.

35. A process to prepare a laminate, according 33, **characterized in that** the first surfactant composition is selected between isodecyl alcohol, lauryl alcohol, tridecyl alcohol, cetyl alcohol, cetyl stearyl alcohol, stearyl alcohol, oleic alcohol, and mixtures or combinations thereof.

36. A process to prepare a laminate, according to claim 33, further **characterized in that** the second surfactant composition is selected between lauryl acid, palmic acid, polyethylene glycol monostearate, stearic acid, and oleic acid.
